# EUROPÄISCHE PATENTSCHRIFT

(11) **EP 0 906 845 B1**
(45) Veröffentlichungstag und Bekanntmachung des Hinweises auf die Patenterteilung: **14.01.2009**
(21) Anmeldenummer: 98116596.2
(22) Anmeldetag: 02.09.1998
(51) Int. Cl.: B60K 26/02

(54) **Verfahren und Vorrichtung zur Steuerung eines Antriebssystemes in einem Kraftfahrzeug**
Apparatus and method for control of a vehicle drive train
Appareil et procédé de commande pour le train d'entraînement d'un véhicule

(30) Priorität: 04.10.1997 DE 19743958
(43) Veröffentlichungstag der Anmeldung: 07.04.1999
(73) Patentinhaber: Bayerische Motoren Werke Aktiengesellschaft, 80788 München (DE)
(72) Erfinder: Rieker, Heinrich, 85241 Prittlbach (DE); Dorrer, Claus, 81925 München (DE)

(56) Entgegenhaltungen:
- EP-A- 0 265 738
- EP-A- 0 633 155
- EP-A- 0 770 979
- DE-A- 3 232 160
- DE-A- 4 205 979
- DE-A- 4 344 369
- DE-A- 19 630 156
- DE-A- 19 810 691

## Beschreibung

Die Erfindung bezieht sich auf ein Verfahren zur Steuerung eines Antriebsystems in einem Kraftfahrzeug nach dem Oberbegriff des Patentanspruchs 1.

Ein derartiges Verfahren ist beispielsweise aus der DE-A-195 36 512 bekannt. Bei diesem bekannten Verfahren wird in Abhängigkeit von fahrzeuginternen und fahrzeugexternen Informationen ein elektronisch gesteuertes Automatikgetriebe als Antriebsystem angesteuert. Hierbei wird eine im elektronischen Steuergerät ermittelte Gangwahlstrategie bestimmt, die ohne einer Möglichkeit der Einflußnahme durch den Fahrer zu einem automatischen Gangwechsel führt. Bei diesem bekannten Verfahren kann der Fahrer zwar über den Positionswählhebel oder über einen Programmwahlschalter den Gangwechsel beschränkt beeinflussen, grundsätzlich wird ein Gangwechsel jedoch abhängig von energie-, sicherheits-, komfort-, schadstoffemissions-, geräusch- und/oder fahrertypbezogenen Vorgaben automatisch ohne ein vorheriges Quittieren durch den Fahrer durchgeführt.

Weiterhin ist aus der DE 43 44 369 A1 ein Verfahren zum Ermitteln einer verbrauchsorientierten Fahrleistungsbegrenzung im Hinblick auf eine geplante Reiseroute bekannt, die dem Fahrer optisch oder akustisch vorgeschlagen wird. Aus der DE 196 30 156 A1 ist eine Steuerung eines selbsttätig schaltenden Getriebes bekannt, bei der vom Fahrer über eine definierte Position des Fahrpedals eine von zwei Schaltprogrammen auswählbar ist.

Weiterhin ist es bekannt, dem Fahrer eine Information über den Momentanverbrauch (Economy-Anzeige) zur Verfügung zu stellen. Diese Economy-Anzeige bietet eine Möglichkeit für den Fahrer, seinen Fahrstil hinsichtlich des Verbrauchs zu beurteilen und ggf. im Hinblick auf eine Verbrauchsreduzierung, insbesondere durch ein iteratives Ausprobieren verschiedener Gaspedalstellungen, anzupassen. Die energiebezogene Vorgabe in Form einer Verbrauchsminimierung wird auf diese Weise nur unzulänglich erreicht. Zum einen kann der Fahrer dabei nur die aktuelle Fahrsituation berücksichtigen und zum anderen wird dem Fahrer zur Verbrauchsminimierung keine konkrete hierfür erforderliche Fahrbetriebsstrategie angeboten.

Es ist Aufgabe der Erfindung, ein Verfahren zur Steuerung eines Antriebsystems in einem Kraftfahrzeug zu schaffen, durch das der Fahrer entsprechend bestimmter Vorgaben in der Wahl seiner Fahrweise unterstützt wird, ohne die grundsätzlich gewünschte Fahrweise des Fahrers zu stark zu beeinflussen.

Diese Aufgabe wird durch die Merkmale des Patentanspruchs 1 gelöst.

Eine vorteilhafte Ausgestaltung der Erfindung ist der Gegenständ des Anspruchs 2.

Wesentlich beim Gegenstand der Erfindung ist zum einen die Unterstützung des Fahrers im Hinblick auf zu erwartende Fahrsituationen unter Berücksichtigung von Vorgaben zur Verbesserung von Energieverbrauch, Sicherheit, Komfort, Schadstoffemissionen, Geräusch und/oder Fahrertypanpassung. In Abhängigkeit von der aktuellen und der zu erwartenden Fahrsituation wird dem Fahrer eine Fahrbetriebs-Soll-Strategie vorgeschlagen. Der Fahrer kann durch eine vorbestimmte Betätigungsweise eines Bedienelements diese vorgeschlagene Fahrbetriebs-Soll-Strategie annehmen. Zum anderen wird dem Fahrer jedoch ermöglicht, seine eigene Fahrbetriebs-Strategie auszuführen, wenn er die vorgeschlagene Fahrbetriebs-Soll-Strategie nicht annimmt. Die Informationen über eine aktuelle Fahrsituation werden insbesondere über fahrzeuginterne Informationsquellen, vorzugsweise mittels ohnehin vorhandener Sensoren erfaßt. Informationen über zu erwartende Fahrsituationen können sowohl über fahrzeuginterne Informationsquellen, wie z. B. mittels digitaler Karten eines Navigationssystems, als auch über fahrzeugexterne Informationsquellen, wie z. B. mittels drahtlos übertragener Daten (z. B. Staumeldungen, Straßensperrungen, zu erwartende Bremsmanöver) von vorausfahrenden Fahrzeugen oder von Verkehrsmeldestationen (z. B. über die bekannten Systeme RDS-TMC, GSM), ermittelt werden. Abhängig von der aktuellen und der zu erwartenden Fahrsituation wird eine Fahrbetriebs-Soll-Strategie zur Verbesserung von Komfort, Sicherheit, Verbrauch, Emissionen und Geräusch mit möglichen Eingriffen in Antriebsysteme abgeleitet. Vorzugsweise wird der Fahrer über die zu erwartende Fahrsituation informiert, während ihm die abgeleitete Fahrbetriebs-Soll-Strategie vorgeschlagen wird. Die Fahrbetriebs-Soll-Strategie kann optisch, akustisch, vorzugsweise jedoch haptisch vorschlagen werden. Eine haptische Informationsvermittlung hat den Vorteil, daß der Fahrer optisch sowie akustisch möglichst wenig vom Verkehrsgeschehen abgelenkt wird.

Vorzugsweise wird der haptische Vorschlag der Fahrbetriebs-Soll-Strategie mittels eines sogenannten aktiven Fahr- bzw. Gaspedals oder anderen Fahrhebels durchgeführt. Beispielsweise bei einem aktiven Gaspedal (Fahrpedal, Fahrhebel) wird die Fahrbetriebs-Soll-Strategie durch einen variablen Druckpunkt am Gaspedal zur Annahme vorgeschlagen. Hierbei wird einer vorgeschlagenen Fahrbetriebs-Soll-Strategie eine bestimmte Position des Fahrpedals zugeordnet. Die Zuordnung dieser Position hängt einerseits von der vorgeschlagenen Fahrbetriebs-Soll-Strategie und andererseits vom momentanen Fahrbetriebs-Zustand (z. B. Geschwindigkeit, Bergfahrt...) ab. Der variable Druckpunkt des Gaspedals wird daraufhin auf die der vorgeschlagenenen Fahrbetriebs-Soll-Strategie zugeordnete Position des Gaspedals gelegt. Bis zum Erreichen des Druckpunktes kann das Gaspedal mit normaler Betätigungskraft, ab Erreichen des Druckpunktes nur mit erhöhter Betätigungskraft durchgetreten werden. Folgt der Fahrer dem variablen Druckpunkt am Gaspedal, wird auf die Annahme der vorgeschlagenen Fahrbetriebs-Soll-Strategie geschlossen. Andernfalls wird auf eine Nicht- Annahme des Vorschlags durch den Fahrer geschlossen.

Alternativ ist jedoch auch eine optische oder akustische Anzeige des Vorschlags für die Fahrbetriebs-Soll-Strategie möglich, wobei die Annahme beispielsweise durch die Betätigung eines vorgesehenen Schalters oder Tasters erfolgen kann.

Bei einer Annahme der Fahrbetriebs-Soll-Strategie durch den Fahrer wird deren Umsetzung durch entsprechende Eingriffe in die Antriebsysteme automatisch ohne weiteres Zutun des Fahrers veranlaßt, wobei der Fahrer vorzugsweise, z. B. durch erneutes Betätigen des dafür vorgesehenen Schalters oder beispielsweise durch zweimaliges Betätigen des dafür vorgesehen Tasters und/oder durch Übertreten des Druckpunktes des aktiven Gaspedals, diesen Automatikbetrieb jederzeit unterbrechen kann.

Ergänzend wird darauf hingewiesen, daß sich die Fahrbetriebs-Soll-Strategie sowohl auf ein Antriebssystem als auch auf mehrere oder alle Antriebssysteme im Fahrzeug beziehen kann. Insbesondere wenn sich die Fahrbetriebs-Soll-Strategie auf mehrere Antriebssysteme bezieht, schafft die Erfindung den Vorteil, daß zur Umsetzung der Fahrbetriebs-Soll-Strategie vom Fahrer lediglich ein einziges Bedienelement betätigt werden muß.

Die Erfindung ist bei Fahrzeugen mit Antriebsmotoren aller Art, z. B. mit Brennkraftmaschinen, mit Hybridantrieben, mit Elektromotoren, mit Erdgasantrieb oder mit Brennstoffzellen, anwendbar.

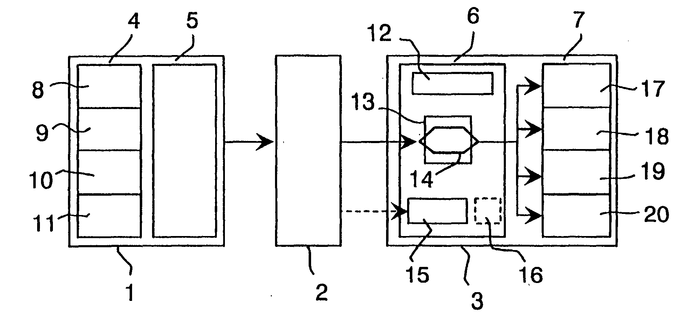

In der Zeichnung ist ein Ausführungsbeispiel der Erfindung dargestellt.

Für die Durchführung des erfindungsgemäßen Verfahrens ist im Fahrzeug ein elektronischer Verkehrsumfelderfassungsblock 1, ein elektronischer Entscheidungsblock 2 und ein elektrischer Fahrzeugbedienungsblock 3 vorgesehen. Der Verkehrsumfelderfassungsblock 1 setzt sich aus einem Erkennungsblock 4 und einem Bewertungsblock 5 zusammen. Im Erkennungsblock 4 werden insbesondere Daten eines Navigationssystems 8, eines automatischen Abstandsregelungssystems 9, eines Empfängersystems 10 für fernübertragene Verkehrs- und Streckendaten und von Antriebsystemen zugeordneten Fahrzeugsensoren 11 erfaßt. Die Daten des Navigationssystems 8 sind beispielsweise Streckendaten aus einer digitalen Straßenkarte, wie z. B. Höhenangaben, Geschwindigkeitsbegrenzungen, Steigungen, Kurven, Ampelpositionen und Kreuzungen. Die Daten des Abstandsregelungssystems 9 sind insbesondere die Abstände und/oder Differenzgeschwindigkeiten zu vorausfahrenden Fahrzeugen. Die Daten des Empfängersystems 10 für fernübertragene Verkehrsdaten sind insbesondere Staumeldungen, Straßensperrungen, Unfallmeldungen und andere regionale Straßenverhältnisse (z. B. Regen, Glatteis). Ein bekanntes System für fernübertragene Verkehrsdaten ist beispielsweise das RDS-TMC-System. Zur Datenfernübertragung per Funk werden vorzugsweise vorhandene Mobiltelefonnetze, insbesondere das GSM-System, verwendet. Die den Antriebssystemen zugeordneten Fahrzeugsensoren 11 liefern insbesondere aktuelle Fahrsituationen, die den momentanen Fahrbetriesbszustand kennzeichnen, wie z. B. die Fahrzeuggeschwindigkeit, die Bremspedalbetätigung, die Gaspedalbetätigung, die Schalthebel- bzw. Positionswählhebelbetätigung, die Leistung des Motors (z. B. der Brennkraftmaschine oder des Elektromotors) oder den Energiespeicherzustand (z. B. den Tankinhalt oder die Batterieladung).

Die im Erkennungsblock 4 erfaßten Daten liefern die Informationen zur Bestimmung der aktuellen und zu erwartenden Fahrsituationen. Diese Informationen werden im Bewertungsblock 5 im Hinblick auf energie-, sicherheits-, komfort-, schadstoffemissions-, geräusch- und/oder fahrertypbezogenen Vorgaben weiterverarbeitet. Beispielsweise im Hinblick auf den Verbrauch, den Zeitbedarf, die Sicherheit, den Verkehrsfluß, den Komfort und den ermittelten Fahrertyp wird anschließend im Entscheidungsblock 2 eine Fahrbetriebs-Soll-Strategie ermittelt, die im Sinne von Verzögerung, Konstantfahrt und/oder Beschleunigung Eingriffe in die Antriebsysteme, wie z. B. in das Bremssystem, in die Motorsteuerung und/oder in die Automatikgetriebesteuerung, vorschlägt. Diese vorgeschlagene Fahrbetriebs-Soll-Strategie sowie gegebenenfalls weitere Fahrerinformationen werden an den Fahrzeugbedienungsblock 3 weitergeleitet. Der Fahrzeugbedienungsblock 3 besteht aus einem Stellgrößenblock 6 und einem Fahrzeugantriebsblock 7.

Der Stellgrößenblock 6 weist insbesondere abfragbare, vom Fahrer zu betätigende Bedienelemente, wie. z. B. die Bremse 12 und das Gaspedal 13 auf. Das Gaspedal 13 ist vorzugsweise ein aktives Gaspedal mit einem Stellelement 14. Einer momentan ausgewählten Fahrbetriebs-Soll-Strategie wird eine bestimmte Position des Fahrpedals 13 zugeordnet. Im Falle der Empfehlung einer Fahrbetriebs-Soll-Strategie wird mittels des Stellelements 14, das vorzugsweise ein mit einer Feder zusammenwirkender Elektromotor ist, die Betätigungskraft des Fahrpedals 13 erhöht, wenn die der vorgeschlagenen Fahrbetriebs-Soll-Strategie zugeordnete Position des Fahrpedals übertreten wird. Durch die Betätigungskrafterhöhung in Form eines variablen Druckpunktes am aktiven Gaspedal kann der Fahrer die vorgeschlagene Fahrbetriebs-Soll-Strategie durch eine dem variablen Druckpunkt folgende Betätigungsweise des Bedienelements Gaspedal annehmen. Andernfalls erkennt der Fahrzeugbedienungsblock 3, daß der Fahrer die vorgeschlagene Fahrbetriebs-Soll-Strategie nicht annehmen will.

Daraufhin wird im Falle einer Annahme im Fahrzeugantriebsblock 7 die Fahrbetriebs-Soll-Strategie durch die im Fahrstrategieblock 2 ermittelten erforderlichen Eingriffe in die Antriebsysteme, insbesondere in das Bremssystem 17, in die Stellung der Drosselklappe 18, in die Gangwahlsteuerung des Automatikgetriebes 19 und/oder in die Einspritzung und Zündung der Motorsteuerung 20, automatisch durchgeführt.

Alternativ oder zusätzlich kann ein manuell zu betätigender Schalter oder Taster 16 als Bedienelement zur Annahme der Fahrbetriebs-Soll-Strategie vorgesehen werden, der vorzugsweise in einem Multifunktionslenkrad angebracht sein kann.

Die automatische Durchführung der Fahrbetriebs-Soll-Strategie kann z. B. durch das Übertreten der der vorgeschlagenen Fahrbetriebs-Soll-Strategie zugeordneten Position des aktiven Gaspedals 13 und/oder durch zweimaliges Betätigen des Tasters 16 vom Fahrer willkürlich abgebrochen werden.

Im Fahrzeugbedienungsblock 3 kann zusätzlich ein Display 15 vorgesehen sein, durch das dem Fahrer optisch sowohl die empfohlene Fahrbetriebs-Soll-Strategie als auch zusätzliche Fahrerinformationen angezeigt werden können.

Durch das erfindungsgemäße Verfahren kann beispielsweise eine Verbrauchsreduzierung durch sinnvolle Nutzung der aufgebauten kinetischen Energie im Fahrzeug erreicht werden. Weiterhin kann der Fahrer bei seiner Fahraufgabe, wie z. B. Verbrauchssenkung und Einhaltung von Geschwindigkeitsbegrenzungen, unterstützt werden. Der Fahrer wird durch die Förderung einer vorausschauenden Fahrweise und die Reduzierung des Bedienaufwands entlastet. Der Fahrkomfort und die Abstimmung der einzelnen Antriebssysteme wird durch ein einziges koordinierendes System und durch zusätzliche Informationen im Hinblick auf die vorausliegende Verkehrsumgebung verbessert.

## Patentansprüche

1. Verfahren zur Steuerung eines Antriebsystems (17, 18, 19, 20) in einem Kraftfahrzeug in Abhängigkeit von Informationen über eine aktuelle und eine zu erwartende Fahrsituation, die über fahrzeuginterne und über fahrzeugexterne Informationsquellen in einem elektronischen Kraftfahrzeugsystem erfasst werden, **dadurch gekennzeichnet, daß** abhängig von diesen Informationen und abhängig von energie-, sicherheits-, komfort-, schadstoffemissions-, geräusch- und/oder fahrertypbezogenen Vorgaben im elektronischen Kraftfahrzeugsystem eine Fahrbetriebs-Soll-Strategie zur Steuerung mindestens eines Antriebsystems (17, 18, 19, 20) im Kraftfahrzeug ermittelt wird, daß diese Fahrbetriebs-Soll-Strategie dem Fahrer vorgeschlagen wird, daß der Fahrer durch eine vorbestimmte Betätigungsweise eines Bedienelements in Form eines Fahrpedals (13) die Fahrbetriebs-Soll-Strategie annehmen kann und daß diese Fahrbetriebs-Soll-Strategie im Falle einer Annahme des Vorschlags automatisch durchgeführt wird, wobei die Fahrbetriebs-Soll-Strategie dem Fahrer haptisch vorgeschlagen wird und wobei einer vorgeschlagenen Fahrbetriebs-Soll-Strategie eine bestimmte Position des Fahrpedals (Gaspedals, Fahrhebels) (13) zugeordnet ist, daß das Fahrpedal (13) mit einem ansteuerbaren Stellelement (14) verbunden ist und daß im Falle der Vorgabe einer Fahrbetriebs-Soll-Strategie mittels des Stellelements (14) die Betätigungskraft des Fahrpedals (13) erhöht wird, wenn die der vorgeschlagenen Fahrbetriebs-Soll-Strategie zugeordnete Position des Fahrpedals (13) übertreten wird, und dass durch die Betätigungskrafterhöhung in Form eines variablen Druckpunktes am Fahrpedal (13) der Fahrer die vorgeschlagene Fahrbetriebs-Soll-Strategie durch eine dem variablen Druckpunkt folgende Betätigungsweise des Fahrpedals (13) annehmen kann.

2. Verfahren nach Patentanspruch 1, **dadurch gekennzeichnet, dass** sich die Fahrbetriebs-Soll-Strategie auch auf mehrere oder alle Antriebssysteme (17, 18, 19, 20) im Fahrzeug beziehen kann.

## Claims

1. A method for controlling a drive system (17, 18, 19, 20) in a motor vehicle as a function of information about a current driving situation and a driving situation to be expected, which are detected by means of information sources internal to the vehicle and external to the vehicle in an electronic motor vehicle system, **characterised in that**, depending on this information and depending on inputs relating to energy, safety, comfort, emissions, noise and/or driver type in the electronic motor vehicle system, a driving operation desired strategy is determined to control at least one drive system (17, 18, 19, 20) in the motor vehicle, **in that** this driving operation desired strategy is proposed to the driver, **in that** the driver, by means of a predetermined mode of actuation of an operating element in the form of an accelerator (13), can adopt the driving operation desired strategy and **in that** this driving operation desired strategy is carried out automatically if the proposal is adopted, the driving operation desired strategy being proposed haptically to the driver and a certain position of the accelerator (accelerator pedal, accelerator lever) (13) being associated with a proposed driving operation desired strategy, **in that** the accelerator (13) is connected to an activatable actuating element (14), and **in that**, in the event of the inputting of a driving operation desired strategy, by means of the actuating element (14), the actuating force of the accelerator (13) is increased if the position of the accelerator (13) associated with the proposed driving operation desired strategy is passed over and **in that** by means of the actuating force increase in the form of a variable pressure point on the accelerator (13), the driver can adopt the proposed driving operation desired strategy by a mode of actuating the accelerator (13) following the variable pressure point.

2. A method according to claim 1, **characterised in that** the driving operation desired strategy can also relate to a plurality of or all of the drive systems (17, 18, 19, 20) in the vehicle.

## Revendications

1. Procédé de commande d'un système d'entraînement (17,18, 19, 20) d'un véhicule automobile en fonction des informations concernant la situation de conduite actuelle et une situation de conduite prévisible, saisies par des sources d'information internes au véhicule et des sources d'information externes au véhicule dans un système électronique du véhicule,
**caractérisé en ce qu'**
en fonction de ces informations et en fonction des consignes imposées concernant l'énergie, la sécurité, le confort, les émissions polluantes, le bruit et/ou le type de véhicule, dans le système électronique du véhicule, on détermine une stratégie de consigne de gestion de fonctionnement pour commander au moins un système d'entraînement (17,18, 19, 20) du véhicule,
cette stratégie de consigne d'entraînement est proposée au conducteur,
qui peut accepter cette stratégie de consigne de gestion de fonctionnement en actionnant de manière prédéterminée un élément de manoeuvre sous la forme d'une pédale d'accélérateur (13),
cette stratégie de consigne de gestion de fonctionnement est effectuée automatiquement au cas où la proposition est acceptée,
la stratégie de consigne de gestion de fonctionnement est proposée de manière haptique au conducteur,
une position déterminée de la pédale d'accélérateur (pédale d'accélérateur ou levier d'accélérateur) (13) est associée à une stratégie de consigne de gestion de fonctionnement proposée,
la pédale d'accélérateur (13) est reliée à un élément d'actionnement commandé (14),
au cas où la consigne d'une stratégie de gestion de fonctionnement est donnée par l'élément d'actionnement (14), la force d'actionnement de la pédale d'accélérateur (13) est augmentée si l'on dépasse la position de la pédale d'accélérateur (13) associée à la stratégie de consigne de gestion de fonctionnement proposée, et
en augmentant la force d'actionnement sous la forme d'un point de poussée variable de la pédale d'accélérateur (13), le conducteur peut accepter la stratégie de consigne de gestion de fonctionnement proposée par sa façon d'actionner la pédale d'accélérateur (13) selon le point de pression variable.

2. Procédé selon la revendication 1,
**caractérisé en ce que**
la stratégie de consigne de gestion de fonctionnement peut concerner plusieurs ou tous les systèmes d'entraînement (17,18, 19, 20) du véhicule.
